# EUROPEAN PATENT APPLICATION

(11) **EP 3 085 453 A1**
(43) Date of publication of application: **26.10.2016**
(21) Application number: 15164995.1
(22) Date of filing: 24.04.2015
(51) Int. Cl.: B04B 11/00, B04B 11/04

(54) **METHOD OF LOADING SAMPLE CONTAINERS INTO A CENTRIFUGE AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: van Mierlo, Hans, 5141 HC Waalwijk (NL)
(74) Representative: Patentanwälte Ruff, Wilhelm, Beier, Dauster & Partner mbB

(57) **Abstract**

The invention relates to a method of loading a plurality of sample containers into a plurality of positions of a centrifuge and to a corresponding laboratory automation system. Imbalance of the centrifuge is minimized by determining a total weight of each sample container based on detection of respective types of the sample containers and liquid levels associated with samples contained in the respective sample containers. Thus, the addition of a balance to the laboratory automation system can be omitted.

## Description

### Applicable field and prior art

The invention relates to a method of loading a plurality of sample containers into a plurality of positions of a centrifuge. The invention relates further to a laboratory automation system.

It is common in the operation of laboratory automation systems that sample containers containing samples to be analyzed by a plurality of laboratory stations have to be centrifuged before certain analyzing steps are performed. For example, blood samples can be separated into a plasma phase and a cruor by means of centrifuging.

In typical laboratory automation systems or in other cases where a centrifuge is to be loaded with a plurality of sample containers it is known to either measure a weight of each sample container by means of a balance in order to minimize imbalance, or to arbitrarily load the centrifuge and to stop operation of the centrifuge if an imbalance detected during operation is too large.

Adding a balance to a laboratory automation system raises costs and complexity of the system. Arbitrarily loading a centrifuge leads to a certain amount of centrifuging operations being aborted, resulting in significant delays in operation and a decreased system throughput.

### Objects and solutions

It is thus an object of the invention to provide for a method of loading a plurality of sample containers into a plurality of positions of a centrifuge and a laboratory automation system that enable a fast and reliable loading of the centrifuge.

This object is achieved by a method according to claim 1 and a laboratory automation system according to claim 9.

The invention relates to a method of loading a plurality (a number) of sample containers into a plurality (a number) of defined inserting positions of a centrifuge, the method comprising the steps:
- determining a total weight for each sample container to be centrifuged, wherein the total weight is a sum of the weight of the sample container (and, if any, of a cap closing the sample container) and the weight of a sample contained in the sample container,
- assigning positions of the centrifuge to the sample containers (to a part of the sample containers) in response to the determined weights, preferably such that a level of imbalance is minimized and/or lower than a predetermined threshold, and
- loading the sample containers (the part of the sample containers) into the centrifuge according to the assigned positions.

The plurality or number of the sample containers and the plurality or number of the positions of the centrifuge may be identical or may differ. Typically, the number of the sample containers is higher than the number of the positions of the centrifuge. The number of the positions of the centrifuge may typically range between 10 and 50. The number of the sample containers may typically range between 100 to several thousands. If the number of the sample containers is higher than the number of the positions of the centrifuge, the sample containers may be centrifuged sequentially in consecutive runs, wherein in each run the centrifuge is loaded with a number of sample containers, wherein the number of loaded sample containers may be equal to or smaller than the number of the positions of the centrifuge.

According to the invention, the following further steps are performed:
- detecting, for each of the sample containers, a type of the respective sample container,
- detecting, for each of the sample containers, a liquid level of a sample contained in the respective sample container, and
- calculating, for each of the sample containers, the total weight based on the type and the liquid level of the respective sample container.

By means of the invention, it is possible to use means for detecting a type of a sample container and means for detecting a liquid level of a sample in order to determine a total weight of a sample container, wherein such means are typically already provided for other purposes in a laboratory automation system. Thus, the addition of a balance can be omitted. This leads to a significantly reduced system complexity compared to the use of a balance and to an increased throughput compared with arbitrarily loading the centrifuge.

A position of a centrifuge is typically formed by an opening or a clearance formed in the centrifuge in which a sample container can be loaded or inserted. According to an embodiment, fastening means can be present in the centrifuge in order to fix the sample containers at their specific place.

Sample containers can typically be embodied as usual laboratory tubes that are widely used in medical or chemical environments.

According to an embodiment, the step of detecting a type of the respective sample container comprises the steps of:
- capturing an image of the respective sample container, and
- performing image processing on the captured image to detect the type of the respective sample container.

Such steps can be performed by a tube type identification module that typically comprises a camera. Alternatively, it would be possible, for example, to identify a sign on the sample container, for example a bar code. For such identification purposes, a simpler means than a camera can be used, for example a laser scanner.

According to an embodiment, the step of detecting the liquid level of the sample container comprises the steps:
- measuring a first transmission through the sample container along different vertical positions of the sample container at a first wavelength,
- measuring a second transmission through the sample container along the different vertical positions of the sample container at a second wavelength, and
- evaluating the liquid level in dependence of the first transmission and of the second transmission.

Such determination steps for detecting a liquid level have been proven suitable for typical applications. Reference is insofar made to the document DE 10 2009 005 252 A1, where corresponding methods and apparatuses are disclosed. The content of this document is incorporated by reference herein in its entirety.

It should, however, be noted that a liquid level can also be detected using other methods or apparatuses, for example using only one transmission through the sample container at a specific wavelength, using a bright, for example white spectrum of wavelengths or detecting a liquid level by a camera.

It should be noted that a transmission, for example the first transmission or the second transmission as mentioned above, are typically to be understood as tables comprising a transmission value for each vertical position at which a measurement was made. It should further be noted that the wavelength at which a transmission is measured can be selected before applying the light to the sample container and/or after the light exits the sample container, for example by using specific filters.

According to an embodiment, the sample containers are classified in a plurality of weight categories, wherein the (all) positions of the centrifuge are assigned to sample containers having the same weight category. Typically, sample containers having the same weight category are assigned to the positions during a single centrifuging run. At another centrifuging run, another weight category can be used.

According to an embodiment, the weight categories are adapted according to a total amount of the plurality of sample containers.

According to an embodiment, each weight category comprises a range of weights, and the method comprises the following steps:
- determining a total number of the plurality of sample containers,
- narrowing the ranges of weights if the total number is above one or more of a plurality of upper thresholds, and
- widening the ranges of weights if the total number is below one or more of a plurality of lower thresholds.

By means of such an adaptation of the weight categories or the ranges the method can adapt to different amounts of sample containers that are to be centrifuged. For example, if many sample containers are present probably being enough for several loads of the centrifuge, the number of weight categories can be increased so that the sample containers can be classified in weight categories with a finer resolution. Otherwise, if not so many sample containers are present, less weight categories can be used with wider ranges such that loading the centrifuge with sample containers of the same weight category is not unduly impeded.

According to an embodiment, calculating the weight comprises retrieving data indicative of a geometry associated with the respective type of the sample container, wherein the weight is calculated based, at last in part, on an amount of the sample contained in a respective geometry up to the detected liquid level.

The geometry can, for example, be stored in a database from which it can be read out. The geometry typically specifies a hollow interior of the sample container in which a sample can be comprised. For example, data like a diameter of the sample container or a radius of a curvature can be defined by the geometry. It is thus relatively simple to calculate a specific amount of sample contained in the sample container when both the geometry and the liquid level are known.

According to an embodiment, calculating the weight comprises retrieving weight data associated with the respective type of the sample container, wherein the weight is calculated based, at least in part, on the weight data. The weight data can, for example, be stored in a database, for example in the same database in which the geometry is stored. It allows for an easy incorporation of the weight of the sample container itself.

The invention further relates to a laboratory automation system, comprising:
- a number of sample containers,
- a centrifuge having a plurality of positions,
- a tube type identification device, wherein the tube type identification device is adapted to detect, for each of the sample containers, a type of a respective sample container,
- a liquid level detecting device, wherein the liquid level detecting device is adapted to detect, for each of the sample containers, a liquid level of a sample contained in the respective sample container,
- an electronic control unit, wherein the electronic control unit is adapted to:
   - calculate, for each of the sample containers, the total weight based on its type and liquid level,
   - assign positions of the centrifuge to the containers in response to the determined weights, preferably such that a level of imbalance is minimized and/or lower than a predetermined threshold, and
- a centrifuge loading device, wherein the centrifuge loading device is adapted to load the sample containers into the centrifuge according to the assigned positions.

BY means of the inventive laboratory automation system, a method as defined above can be performed in order to load a centrifuge that is part of the laboratory automation system. It should be noted that all embodiments and variations as discussed above can also be applied to the laboratory automation system, for example the electronic control unit can be programmed, adapted or configured in order to perform such steps.

The electronic control unit can comprise processor means and memory means, wherein program code is stored in the memory means that cause the processor means to behave in a certain way, for example to perform an inventive method.

According to an embodiment, the laboratory automation system comprises a camera for capturing an image of the respective sample container and image processing means for performing image processing on the captured image to detect the type of the respective sample container.

This allows for a preferred detection of a type of the sample container as has already been discussed above with respect to the inventive method.

According to an embodiment, the liquid level detecting device comprises a first light source and a second light source, preferably embodied as laser diodes. The liquid level detecting device further comprises one or two detectors for measuring a first transmission through the sample container in dependence of a vertical position of the sample container at a first wavelength and a second transmission through the sample container in dependence of a vertical position of the sample container at a second wavelength. The liquid level detector further comprises evaluating means for evaluating the liquid level in dependence of the first transmission and the second transmission.

By means of such a liquid level detector, a liquid level can be detected reliably and easily. Reference is made to the discussion of the corresponding approach given above with respect to the inventive method.

### Brief description of the drawing

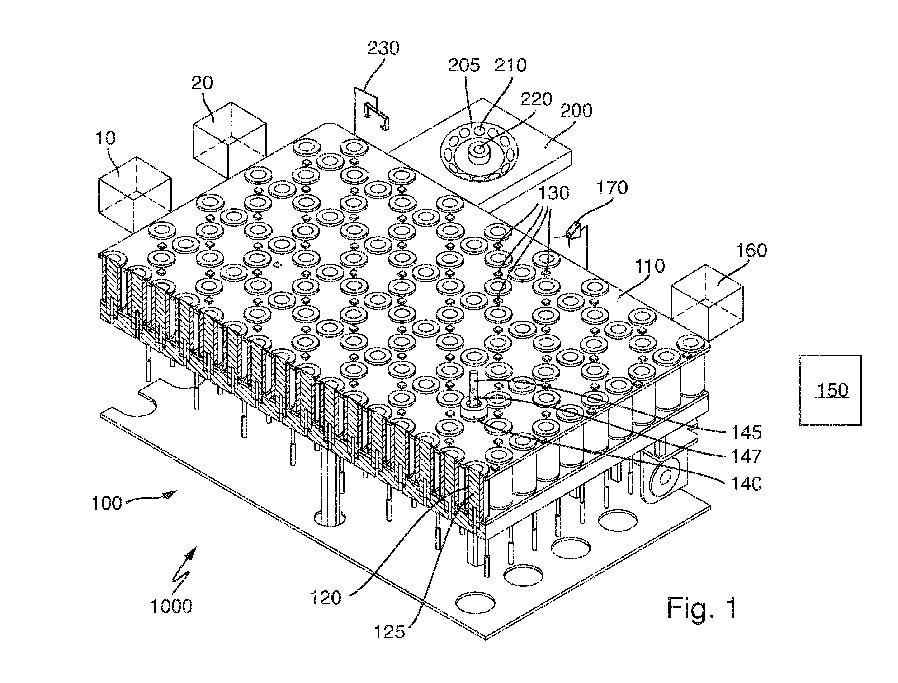

The invention will now be described in detail with reference to the drawing. In the drawing, fig. 1 shows a laboratory automation system according to the invention.

### Detailed description of the embodiment

Fig. 1 shows a laboratory automation system 1000 comprising, inter alia, a first laboratory station 10, a second laboratory station 20 and a laboratory sample distribution system 100. The laboratory stations 10, 20 can, for example, generally be pre-analytical, analytical and/or post-analytical stations. It is to be understood that the laboratory stations 10, 20 are shown here only exemplarily and that typical laboratory automation systems have more laboratory stations.

The laboratory sample distribution system 100 comprises a transport plane 110, a plurality of electromagnetic actuators 120 formed as respective solenoids each comprising a core 125, and a number of position sensors 130 that are embodied as Hall sensors. On the transport plane 110 there is shown a sample container carrier 140 carrying a sample container 145. In the sample container 145, there is contained a sample 147 that is to be analyzed, for example by the laboratory stations 10, 20.

It is to be understood that the sample container carrier 140 with its sample container 145 is shown only for exemplary purposes here and that a typical laboratory sample distribution system will have a plurality of sample container carriers carrying respective sample containers.

The sample container carrier 140 comprises a permanent magnet that is not shown and that can interact with a magnetic field generated by the electromagnetic actuators 120.

The sample distribution system 100 further comprises an electronic control unit 150 that is adapted to drive the electromagnetic actuators 120 such that the sample container carrier 140 moves along a corresponding transport path by interaction of the magnetic fields generated by the electromagnetic actuators 120 and by the magnet of the sample container carrier 140. The electronic control unit 150 is further adapted to receive signals from the position sensors 130 that sense the magnetic field generated by the magnet of the sample container carrier 140. Thus, the electronic control unit 150 is able to determine the position of the sample container carrier 140.

The laboratory automation system 1000 further comprises a liquid level detecting device 160 that is adapted to sense a liquid level of the sample 147 contained in the sample container 145. The liquid level detecting device 160 is embodied as disclosed in DE 10 2009 005 252 A1. The liquid level detecting device 160 is connected to the electronic control unit 150 such that a liquid level can be received by the control unit 150.

The laboratory automation system 1000 further comprises a tube type identification device embodied as a camera 170 that can take digital images of the sample container 145 if it is brought in the vicinity of the camera 170. The camera 170 is connected to the electronic control unit 150 such that an image taken by the camera 170 can be received by the electronic control unit 150. The electronic control unit 150 is configured to perform image detection and thus to detect a type of the sample container 145.

The laboratory automation system 1000 further comprises a centrifuge 200 that is embodied according to a normal design of a laboratory centrifuge. The centrifuge 200 comprises a number of positions 210 in which sample containers 145 can be placed. The positions 210 are arranged along a ring 205 having a circular shape.

The centrifuge 200 further comprises an electric motor 220 that is adapted to rotate the ring 205 with an angular velocity sufficient to centrifuge and thus separate the sample 147 comprised in a sample container 145 if it is placed in one of the positions 210. This corresponds to a normal centrifugation operation.

Besides the centrifuge 200, there is arranged a centrifuge loading device 230 comprised in the laboratory automation system 1000 that is adapted to load sample containers 145 into the centrifuge 200.

Both the centrifuge 200 and the centrifuge loading device 230 can be controlled by the electronic control unit 150 or by a separate, dedicated control unit (not depicted).

The electronic control unit 150 is configured to detect, for each sample container 145, a type of the sample container 145 using the camera 170. The electronic control unit 150 is further adapted to detect, using the liquid level detecting device 160, a liquid level of the sample 147. Then it retrieves a weight and a geometry associated with the type of sample container 145 from a database and calculates, based on the geometry and the liquid level, the amount of the sample 147. Using this amount, a weight of the sample 147 is calculated. Furthermore, a total weight of the sample container 145 including the contained sample 147 is calculated by adding the weight of the sample container 145 to the weight of the sample 147.

This operation is done for every sample container 145 that is carried on the transport plane 110 and that is to be centrifuged. Then, the sample containers 145 are categorized in a plurality of weight categories, wherein each weight category comprises a range of weights. The number and the ranges of the weight categories can be adapted according to the total amount of sample containers 145 currently waiting for centrifugation operation.

The electronic control unit 150 controls movement of the sample container carriers 140 and operation of the centrifuge loading device 230 such that all positions 210 of the centrifuge 200 are loaded with sample containers 145 of the same weight category. By means of such an operation, imbalance of the centrifuge 200 can be minimized and/or held below a predetermined threshold, so that it is very unlikely that the centrifuge 200 will stop during operation due to imbalance. After a centrifugation run, the centrifuge 200 can be loaded with sample containers 145 of another weight category for the next run. However, also the same weight category could be used if enough sample containers 145 of that weight category are available.

In case there are not enough sample containers 145 of one weight category, it is possible to load the centrifuge 200 with sample containers 145 of different weight categories, for example such that sample containers 145 of equal weight category are positioned with an angle of 180° between them. It is further possible that the electronic control unit 150 accesses a laboratory information system that has an overview not only about the sample containers 145 currently being carried by the transport plane 110, but also being in other places of a laboratory and that have to be centrifuged. Using such information, the electronic control unit 150 can calculate if it is suitable to wait until enough sample containers 145 are available or if it is suitable to load the centrifuge 200 only partially for a centrifugation operation. It should be noted that the electronic control unit 150 can also be configured to determine that a subset of the positions 210 should be loaded with dummy tubes in order to minimize imbalance.

## Claims

1. Method of loading a plurality of sample containers (145) into a plurality of positions (210) of a centrifuge (200), the method comprising the steps:
- determining a total weight for each of the sample containers (145) to be centrifuged, wherein the total weight is a sum of the weight of the sample container (145) and the weight of a sample (147) contained in the sample container (145),
- assigning positions (210) of the centrifuge (200) to the sample containers (145) in response to the determined weights, and
- loading the sample containers (145) into the centrifuge (200) according to the assigned positions (210),
**characterized in that**
- the step of determining a total weight for each of the sample containers (145) to be centrifuged comprises the steps:
- detecting for each of the sample containers (145) a type of the respective sample container (145),
- detecting for each of the sample containers (145) a liquid level associated with the sample (147) contained in the respective sample container (145), and
- calculating for each of the sample containers (145) the total weight based on the type and the liquid level of the respective sample container (145).

2. Method according claim 1,
**characterized in that**
- the step of detecting a type of the respective sample container (145) comprises the steps of:
- capturing an image of the respective sample container (145), and
- performing image processing on the captured image to detect the type of the respective sample container (145).

3. Method according to claim 1 or 2,
**characterized in that**
- the step of detecting the liquid level associated with the sample container (145) comprises the steps:
- measuring a first transmission through the sample container (145) in dependence of a vertical position of the sample container (145) at a first wavelength,
- measuring a second transmission through the sample container (145) in dependence of the vertical position of the sample container (145) at a second wavelength, and
- evaluating the liquid level in dependence of the first transmission and the second transmission.

4. Method according to one of the preceding claims,
**characterized in that**
- the sample containers (145) are classified in a plurality of weight categories, wherein the positions (210) of the centrifuge (200) are assigned to sample containers (145) having the same weight category.

5. Method according to claim 4,
**characterized in that**
- the weight categories are adapted according to a total number of the plurality of sample containers (145).

6. Method according to claim 4 or 5,
**characterized in that**
- each weight category comprises a range of weights, wherein the method further comprises the steps:
- determining a total number of the plurality of sample containers (145),
- narrowing the ranges of weights if the total amount is above one or more of a plurality of upper thresholds, and
- widening the ranges of weights if the total amount is below one or more of a plurality of lower thresholds.

7. Method according to one of the preceding claims, **characterized in that**
- the step of calculating the weight comprises retrieving data indicative of a geometry associated with the respective type of the sample container (145), wherein the weight is calculated based, at least in part, on a volume of the sample (147) contained in a respective geometry up to the detected liquid level.

8. Method according to one of the preceding claims,
**characterized in that**
- the step of calculating the weight comprises retrieving weight data associated with the respective type of the sample container (145), wherein the weight is calculated based, at least in part, on the weight data.

9. Laboratory automation system (1000), comprising:
- a number of sample containers (145),
- a centrifuge (200) having a plurality of positions (210),
- a tube type identification device (170), wherein the tube type identification device (170) is adapted to detect for each of the sample containers (145) a type of a respective sample container (145),
- a liquid level detecting device (160), wherein the liquid level detecting device (160) is adapted to detect for each of the sample containers (145) a liquid level associated with a sample (147) contained in the respective sample container (145),
- an electronic control unit (150), wherein the electronic control unit (150) is adapted to:
- calculate for each of the sample containers (145) the total weight based on its type and liquid level, and
- assign positions (210) of the centrifuge (200) to the sample containers (145) in response to the determined weights, and
- a centrifuge loading device (230), wherein the centrifuge loading device (230) is adapted to load the sample containers (145) into the centrifuge (200) according to the assigned positions (210).

10. Laboratory automation system (1000) according to claim 9,
**characterized in that**
- tube type identification device comprises a camera (170) for capturing an image of the respective sample container (145) and image processing means for performing image processing on the captured image to detect the type of the respective sample container (145).

11. Laboratory automation system (1000) according to claim 9 or 10,
**characterized in that**
- the liquid level detecting device (160) comprises
- a first light source adapted to emit light at a first wavelength and a second light source adapted to emit light at a second wavelength, wherein the light emitted by the first and the second light source is applied to the sample container (145),
- at least one detector for measuring a first transmission through the sample container (145) in dependence of a vertical position of the sample container (145) at the first wavelength and a second transmission through the sample container (145) in dependence of a vertical position of the sample container (145) at the second wavelength, and
- evaluating means for evaluating the liquid level in dependence of the first transmission and the second transmission.
